# FASCICULE DE BREVET EUROPEEN

(11) **EP 3 609 754 B1**
(45) Date de publication et mention de la délivrance du brevet: **10.03.2021**
(21) Numéro de dépôt: 18718412.2
(22) Date de dépôt: 09.04.2018
(51) Int. Cl.: B60T 13/66, B60T 13/68, B60T 15/18

(54) **ROBINET DE MECANICIEN SIMPLIFIE ET CIRCUIT PNEUMATIQUE DE FREINAGE D'UNE RAME FERROVIAIRE INCORPORANT UN TEL ROBINET DE MECANICIEN**
VEREINFACHTES FÜHRERBREMSVENTIL UND PNEUMATISCHER BREMSKREIS EINES SCHIENENFAHRZEUGS MIT EINEM SOLCHEN FÜHRERBREMSVENTIL
SIMPLIFIED DRIVERS VALVE AND PNEUMATIC BRAKING CIRCUIT FOR A RAIL VEHICLE INCORPORATING SUCH A DRIVERS VALVE

(30) Priorité: 10.04.2017 FR 1753089
(43) Date de publication de la demande: 19.02.2020
(73) Titulaire: Matisa Matériel Industriel SA, 1023 Crissier (CH)
(72) Inventeur: GANZ, Jörg, 1163 Etoy (CH)
(74) Mandataire: Alatis
(86) Numéro de dépôt international: PCT/EP2018/059037
(87) Numéro de publication internationale: WO 2018/189116

(56) Documents cités:
- EP-A2- 0 113 844
- EP-A2- 0 149 493
- EP-A2- 0 496 058
- DE-B- 1 165 645

## Description

### DOMAINE TECHNIQUE DE L'INVENTION

L'invention se rapporte à un robinet de mécanicien, et notamment à un robinet de mécanicien simplifié. On désigne par robinet de mécanicien un organe de commande pneumatique ou électropneumatique qui permet de faire varier la pression d'une conduite de frein qui alimente les freins pneumatique d'un véhicule ferroviaire. Pour les trains et rames automotrices de faibles longueurs, comportant un nombre de véhicules réduit, un nombre d'essieux réduit, et présentant une longueur réduite, la commande pneumatique peut être de conception simplifiée, et l'on parle alors de robinet de mécanicien simplifié.

### ÉTAT DE LA TECHNIQUE ANTÉRIEURE

On connaît des commandes de freinage simplifiées, dites robinets de mécanicien simplifiés, assurant le pilotage de la pression pneumatique dans une conduite générale d'alimentation pneumatique des freins de service. Typiquement, un tel robinet de mécanicien doit assurer une position de serrage du frein de service par abaissement de la pression dans la conduite générale, une position de desserrage, une position de desserrage par augmentation de la pression dans la conduite générale et la possibilité de moduler la pression dans la conduite générale pour moduler le freinage.

Mais il est difficile avec un robinet de mécanicien simplifié selon l'état de la technique, d'assurer à la fois un débit important de remplissage et de vidange de la conduite générale des freins, nécessaire pour obtenir un temps de réponse satisfaisant, et un réglage fin de la pression dans la conduite générale.

Par ailleurs, on connaît des robinets de mécanicien comportant une vanne pneumatique de relais, commandée par étage de pilotage électropneumatique. Mais se pose alors la question de la commande de la vanne de relais dans des circonstances exceptionnelles, par exemple en cas de fuite importante dans la conduite générale de frein, ou en cas de déclenchement d'un frein d'urgence indépendant du robinet de mécanicien et ayant pour effet de vidanger la conduite générale de frein.

Dans le document EP 0 496 058 A2 est décrit un robinet de mécanicien selon le préambule de la revendication 1.

### EXPOSÉ DE L'INVENTION

L'invention vise à remédier aux inconvénients de l'état de la technique et à proposer une commande pneumatique simple combinant une grande capacité de débit, une capacité de réglage fin des paliers de remplissage et de vidange et une gestion de circonstances exceptionnelles de vidange de la conduite générale de frein.

Pour ce faire est proposé, selon un premier aspect de l'invention, un robinet de mécanicien pour commander un circuit pneumatique de freinage d'une rame d'un ou plusieurs véhicules ferroviaires, le circuit pneumatique de freinage comportant une conduite d'alimentation, une conduite générale de frein pour distribuer une pression à un ou plusieurs mécanismes de freins pneumatiques, le robinet de mécanicien comportant :
- une vanne pneumatique de relais comportant un volume d'admission destiné à être raccordé à la conduite d'alimentation, un volume d'échappement destiné à être raccordé à la conduite générale de frein, un orifice de purge et un volume de pilotage, la vanne pneumatique de relais étant apte, en présence d'une différence positive suffisante entre une pression de pilotage régnant dans le volume de pilotage et une pression d'échappement régnant dans le volume d'échappement, à ouvrir un passage entre le volume d'admission et le volume d'échappement, et étant apte à ouvrir un passage entre le volume d'échappement et l'orifice de purge au moins lorsque le volume de pilotage est à la pression atmosphérique ; et
- un étage de pilotage électropneumatique pour faire varier la pression de pilotage, comportant un ensemble d'une ou plusieurs électrovannes, apte à relier le volume de pilotage alternativement à une source de pression et à un orifice de vidange, et une soupape de vidange apte à vidanger le volume de pilotage en présence d'une différence de pression supérieure à un seuil positif donné entre le volume de pilotage et le volume d'échappement.

La vanne pneumatique de relais confère au robinet de mécanicien une grande capacité, et l'étage de pilotage permet le réglage fin recherché des paliers de remplissage et de vidange.

La soupape de vidange devient quant à elle active notamment en cas de fuite importante sur le circuit de freinage principal, par exemple dans la conduite générale de frein, ou lorsqu'un dispositif de freinage d'urgence a été appliqué et a provoqué une vidange de la conduite générale de frein. Son rôle, dans de telles circonstances, est d'éviter que la vanne pneumatique de relais provoque un remplissage de la conduite générale de frein.

En pratique, la vanne pneumatique de relais sera dimensionnée pour minimiser la perte de charge dans les conditions de remplissage. En particulier, la section de passage nominale (maximale) entre le volume d'admission et le volume d'échappement et la section de passage nominale (maximale) entre le volume d'échappement et l'orifice de purge seront dimensionnées en fonction du diamètre de la conduite d'alimentation et de la conduite générale de frein pour minimiser les pertes de charge.

De préférence, la vanne pneumatique de relais est apte à maintenir le volume d'échappement isolé du volume d'admission et de l'orifice de purge lorsque la différence entre la pression de pilotage et la pression d'échappement est supérieure à un seuil positif donné de purge et inférieure à un seuil positif donné de remplissage. La plage de fonctionnement ainsi définie correspond à un état neutre de la vanne pneumatique de relais, qui permet de stabiliser la commande de la vanne pneumatique de relais. Toutefois, on aura intérêt à ce que la plage de fonctionnement correspondant à cette position intermédiaire d'isolement soit relativement faible, de sorte que le temps de réponse de la vanne pneumatique de relais soit faible. Le seuil positif de purge est de préférence nul ou proche de zéro : dès que le volume de pilotage est en dépression par rapport au volume d'échappement, cette dernière est purgée.

Suivant un mode de réalisation particulièrement avantageux, l'ensemble d'une ou plusieurs électrovannes a un état normalement ouvert reliant le volume de pilotage à l'orifice de vidange en l'absence d'alimentation électrique. Une défaillance électrique de l'étage de pilotage électropneumatique se traduit ainsi par la vidange du volume de pilotage, qui entraîne elle-même la purge du volume d'échappement, donc le serrage des freins.

En pratique, on peut notamment prévoir que l'ensemble d'une ou plusieurs électrovannes comporte une électrovanne de vidange apte à relier le volume de pilotage à l'orifice de vidange, de préférence par l'intermédiaire d'un étranglement. De préférence, l'électrovanne de vidange est une électrovanne en tout ou rien. On évite ainsi le recours à une électrovanne proportionnelle. De préférence, l'électrovanne de vidange est normalement ouverte dans une position reliant le volume de pilotage à l'orifice de vidange en l'absence d'alimentation électrique.

Par ailleurs, on peut prévoir que l'ensemble d'une ou plusieurs électrovannes comporte une électrovanne de remplissage apte à relier la source de pression au volume de pilotage, de préférence par l'intermédiaire d'un étranglement. Le cas échéant, on peut prévoir un réducteur de pression branché en série entre le volume d'admission et l'électrovanne de remplissage, pour assurer que la pression maximale dans le circuit de pilotage ne dépassera pas une valeur nominale donnée, par exemple 5 bars. De préférence, l'électrovanne de remplissage est une électrovanne en tout ou rien. On évite ainsi le recours à une électrovanne proportionnelle. De préférence, l'électrovanne de remplissage est normalement fermée dans une position isolant le volume de pilotage de la source de pression en l'absence d'alimentation électrique.

Suivant un mode de réalisation préféré, l'électrovanne de vidange est branchée en série entre l'électrovanne de remplissage et le volume de pilotage, pour relier le volume de pilotage alternativement à l'électrovanne de remplissage ou à l'orifice de vidange. En pratique, l'étage de pilotage électropneumatique comporte en outre un circuit électrique de pilotage apte d'une part, en réponse à un signal électrique de desserrage des freins, à positionner l'électrovanne de vidange dans une position reliant le volume de pilotage à l'électrovanne de remplissage et à positionner l'électrovanne de remplissage dans une position de remplissage reliant le volume de pilotage à la source de pression par l'intermédiaire de l'électrovanne de vidange et d'autre part, en présence d'un signal électrique de serrage des freins, à positionner l'électrovanne de vidange dans une position de vidange reliant le volume de pilotage à l'orifice de vidange et à positionner l'électrovanne de remplissage dans une position isolant l'électrovanne de vidange de la source de pression.

Suivant un mode de réalisation, l'étage de pilotage électropneumatique comporte en outre une commande de déclenchement d'un palier initial de serrage, comportant un pressostat relié au volume de pilotage, et un circuit logique relié au pressostat et à l'ensemble d'une ou plusieurs électrovannes, et apte, en réponse à un ordre de desserrage, à générer à destination de l'ensemble d'une ou plusieurs électrovannes une commande électrique de vidange partielle du volume de pilotage jusqu'à détection par le pressostat du franchissement d'un seuil prédéterminé de pression, puis à réguler le volume de pilotage au seuil prédéterminé de pression. On pilote ainsi, au niveau de l'étage de pilotage électropneumatique, une fonction de préserrage. Le palier initial de serrage est défini par l'utilisateur, et peut être conforme à des dispositions normatives. En pratique, pour une pression nominale de desserrage de 5 bars dans la conduite générale de frein, le palier initial de serrage sera par exemple fixé à 4,6 bars. En pilotant le palier initial de serrage au niveau de l'étage de pilotage électropneumatique, on assure un temps de réponse largement indépendant du volume de la conduite générale de frein, du nombre d'essieux et de la longueur du train.

Suivant un mode de réalisation, la vanne pneumatique de relais est apte, en présence d'une différence positive suffisante entre une pression de pilotage régnant dans le volume de pilotage et une pression d'échappement régnant dans le volume d'échappement, à ouvrir le passage entre le volume d'admission et le volume d'échappement avec une section de passage fonction de la pression de pilotage et de la pression d'échappement.

De préférence, le robinet de mécanicien comporte en outre un réservoir de pilotage relié au volume de pilotage, et ayant une capacité de préférence inférieure à 10 litres, de préférence inférieure à 4 litres, et de préférence supérieure à 1 litre. Le réservoir de pilotage constitue un volume tampon qui permet d'obtenir la finesse de réglage recherchée.

Suivant un autre aspect de l'invention, celle-ci a trait à un circuit pneumatique de freinage d'une rame d'un ou plusieurs véhicules ferroviaires, comportant une conduite d'alimentation reliée à un générateur de pression, une conduite générale de frein pour distribuer une pression à un ou plusieurs mécanismes de freins pneumatiques, ainsi qu'un robinet de mécanicien tel que décrit précédemment. De préférence, le circuit de freinage comporte en outre une vanne de freinage d'urgence indépendante du robinet de mécanicien et branchée sur la conduite générale de frein pour vidanger la conduite générale de frein.

### BRÈVE DESCRIPTION DES FIGURES

D'autres caractéristiques et avantages de l'invention ressortiront à la lecture de la description qui suit, en référence aux figures annexées, qui illustrent :
- la figure 1, circuit pneumatique de freinage d'une rame ferroviaire, comportant un robinet de mécanicien selon un mode de réalisation de l'invention ;
- la figure 2, le robinet de mécanicien du circuit pneumatique de freinage de la figure 1.

Pour plus de clarté, les éléments identiques ou similaires sont repérés par des signes de référence identiques sur l'ensemble des figures.

### DESCRIPTION DÉTAILLÉE DE MODES DE RÉALISATION

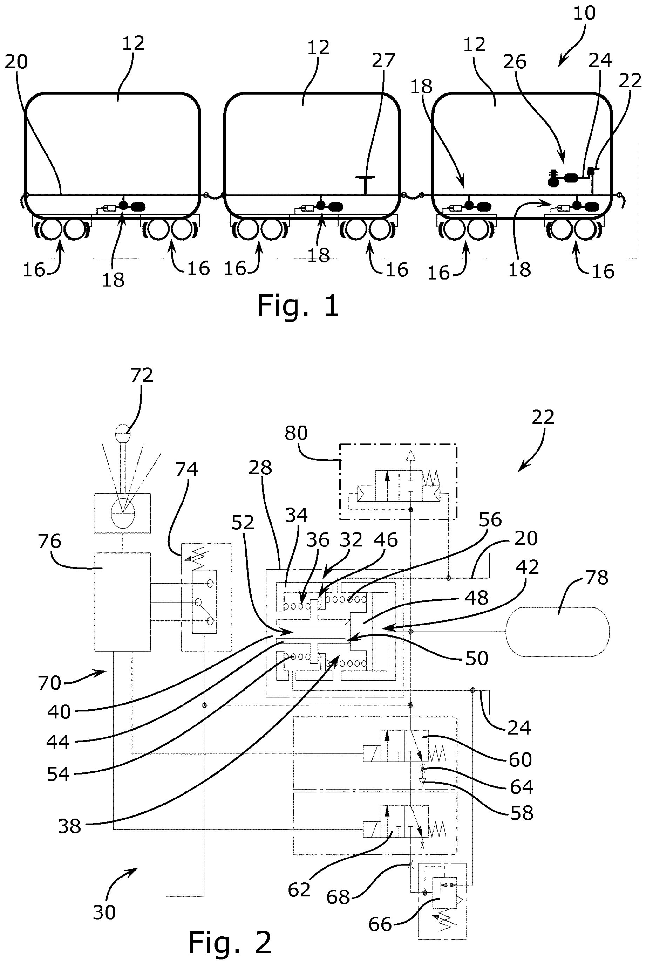

Sur la figure **1** est illustrée une rame ferroviaire **10,** comportant dans cet exemple plusieurs véhicules **12,** supportés chacun par un ou plusieurs trains de roues **16,** dont certains au moins, et de préférence au moins un par véhicule **12,** sont équipés de freins pneumatiques **18.** Une conduite générale de frein **20** parcourt l'ensemble de la rame **10** et relie les freins pneumatiques **18** répartis dans les différents véhicules **12** à un robinet de mécanicien **22,** lui-même relié par une conduite d'alimentation **24** à un groupe de production d'air comprimé **26** embarqué dans un des véhicules **12** de la rame **10.** Les freins pneumatiques **18** sont calibrés de manière à être complètement serrés lorsque la pression dans la conduite générale de frein est inférieure à une pression prédéterminée, par exemple 3,5 bars, et à être complètement desserrés lorsque la pression dépasse un seuil de desserrage total, par exemple de 4,75 bars, la pression nominale dans la conduite générale de frein **20** étant par exemple fixée à 5 bars. La pression délivrée par le groupe de production d'air comprimé **26** est, dans les conditions nominales de fonctionnement, toujours supérieure à la pression nominale dans la conduite générale de frein **20.** Le circuit pneumatique de freinage comporte en outre une vanne de freinage d'urgence **27,** indépendante du robinet de mécanicien **22** et directement branchée sur la conduite générale de frein **20** pour vidanger rapidement la conduite générale de frein en cas d'urgence.

Le robinet de mécanicien **22,** illustré en détail sur la figure **2****,** permet de faire varier la pression de la conduite générale de frein **20** en fonction d'un ordre reçu et comporte à cet effet un étage de puissance pneumatique **28** piloté par un étage de pilotage électropneumatique **30.**

L'étage de puissance pneumatique **28** est ici constitué par une vanne pneumatique de relais **32** à commande pneumatique comportant un corps **34** délimitant un volume d'admission **36** raccordé à la conduite d'alimentation **24,** un volume d'échappement **38** raccordé à la conduite générale de frein **20,** un orifice de purge **40** et un volume de pilotage **42.** Un tiroir **44** sépare le volume d'admission **36** du volume d'échappement **38** lorsqu'il repose sur un siège de soupape de remplissage **46** formé sur le corps **34** de la vanne pneumatique de relais **32.** Un piston de pilotage **48** sépare de manière étanche le volume de pilotage **42** du volume d'échappement **38** et forme un siège de soupape de purge **50** sur lequel vient en appui une extrémité d'une partie centrale tubulaire **52** du tiroir **44,** qui débouche au niveau de l'orifice de purge **40.** Un ressort de compression **54** rappelle le tiroir **44** sur le siège de soupape de remplissage **46,** alors qu'un ressort de pilotage **56** tend à éloigner le piston de pilotage **48** et le siège de soupape de purge **50** de l'extrémité du tiroir **44,** de manière à maintenir ouverte la liaison entre le volume d'échappement **38** et l'orifice de purge **40.**

En pratique, le ressort de pilotage **56** est plus faible que le ressort de compression **54.** Il peut être le cas échéant omis. Il peut prendre appui soit sur le corps **34** de la vanne pneumatique de relais **32,** soit sur le tiroir **44.** Par ailleurs, le tiroir **44** n'a pas d'effet de piston différentiel, au sens où il est conformé de manière que la pression dans le volume d'admission **36** et la pression dans le volume d'échappement n'exercent pas d'effort résultant dans le sens de déplacement du tiroir.

Au repos, le volume de pilotage **56** est vidangé. Le ressort de compression **54** maintient le tiroir **44** en appui contre le siège de soupape de remplissage **46.** Le ressort de pilotage **56** maintient le siège de soupape de purge **50,** porté par le piston de pilotage **48,** à distance de l'extrémité du tiroir **44,** de sorte que le volume d'échappement **38** et la conduite générale de frein **20** sont à la pression atmosphérique. Les freins pneumatiques **18** sont par conséquent serrés.

Lorsqu'une pression est appliquée au volume de pilotage **42,** le piston de pilotage **48** se déplace avec le siège de soupape de purge **50** qui vient en appui contre l'extrémité du tiroir **44** pour isoler le volume d'échappement **38** et la conduite générale de frein **20.** Si la pression dans le volume de pilotage **42** est supérieure à un seuil de remplissage déterminé par le ressort de compression **54** et accessoirement par le ressort de pilotage **56,** le piston de pilotage **48** sépare le tiroir **44** du siège de soupape de remplissage, permettant à l'air comprimé de la conduite d'alimentation **24** de s'écouler, au travers du volume d'admission **36** et du volume d'échappement **38,** dans la conduite générale de frein **20,** pour alimenter la conduite générale **20** et desserrer les freins pneumatiques **18.** La pression dans le volume d'échappement **38** augmente et vient s'appliquer sur le piston de pilotage **48,** dont la position varie en fonction de la pression d'échappement régnant dans le volume d'échappement **38,** de la pression de pilotage régnant dans le volume de pilotage **42** et des efforts appliqués par le ressort de compression **54** et accessoirement par le ressort de pilotage **56.** Lorsque la pression d'échappement est suffisante, le piston de pilotage **42** est repoussé, le tiroir **44** vient en appui sur le siège de soupape de remplissage et isole le volume d'échappement **38.** Un équilibre s'établit entre la pression d'échappement et la pression de pilotage, sans que l'extrémité du tiroir **44** se sépare du siège de soupape de purge **50.**

Si à partir de cette position l'on diminue la pression de pilotage pour atteindre un palier intermédiaire, le piston de pilotage **48** reprend sa course et le siège de soupape de purge **50** se sépare du tiroir **44,** ce qui provoque une diminution de la pression dans la conduite générale de frein **20** reliée au volume d'échappement **38.** Dès qu'un nouvel équilibre de part et d'autre du piston de pilotage **48** est atteint, le siège de soupape de purge **50** revient en appui contre l'extrémité du tiroir **44** et isole de nouveau le volume d'échappement **38** et la conduite générale de frein **20,** qui se trouve à un palier intermédiaire de pression défini par la pression de pilotage.

Inversement, si l'on augmente la pression de pilotage pour atteindre un palier intermédiaire, le piston de pilotage **48** se déplace et repousse le tiroir **44** qui ouvre le passage entre le volume d'admission **36** et le volume d'échappement **38,** permettant un remplissage supplémentaire de la conduite générale de frein **20** et une augmentation de la pression dans le volume d'échappement **38,** qui repousse le piston de pilotage **48.** Le tiroir **44** revient en appui sur le siège de soupape de remplissage **46** et isole le volume d'échappement **38.** Un nouvel équilibre s'établit entre la pression d'échappement et la pression de pilotage.

Naturellement, si l'on purge complètement le volume de pilotage **42,** le passage entre le tiroir **44** et le siège de soupape de purge **50** est maintenu ouvert par le ressort de pilotage **56,** ce qui provoque une vidange complète de la conduite générale de frein **20,** et l'application complète des freins pneumatiques **18.**

La force de rappel du ressort de compression **36** étant proportionnelle à son écrasement, la position du tiroir **44** et la section de passage entre le tiroir **44** et le siège de soupape de remplissage **46** sont des fonctions de la pression de pilotage régnant dans le volume de pilotage **42** et de la pression d'échappement régnant dans le volume d'échappement et dans la conduite générale de frein. Dans la plage d'ouverture du passage entre le tiroir **44** et le siège de soupape de remplissage **46,** la section de passage entre le tiroir **44** et le siège de soupape de remplissage **46** est une fonction monotone croissante de la différence de pression entre la pression de pilotage et la pression d'échappement. La vanne pneumatique de relais **32** est dimensionnée de manière à ce que lorsque la section de passage entre le tiroir **44** et le siège de soupape de remplissage **46** est maximale, la perte de charge constituée par la vanne pneumatique de relais **32** soit faible.

De même, la force de rappel du ressort de pilotage **56** étant proportionnelle à son écrasement, la position du piston de pilotage **48** avant son entrée en contact avec le tiroir **44** est une fonction de la différence de pression entre le volume de pilotage **42** et le volume d'échappement **38,** qui est ici à la pression atmosphérique. La section de passage entre le siège de soupape de purge **50** et le tiroir **44** est une fonction monotone décroissante de la différence entre la pression de pilotage et la pression atmosphérique. La vanne pneumatique de relais **32** est dimensionnée de manière à ce que lorsque la section de passage entre le tiroir **44** et le siège de soupape de purge **50** est maximale, donc lorsque le volume de pilotage est à la pression atmosphérique, la perte de charge constituée par la vanne pneumatique de relais **32** entre la conduite générale de frein **20** et l'orifice de purge **40** soit faible.

L'étage de pilotage électropneumatique **30,** destiné à faire varier finement la pression de pilotage dans le volume de pilotage **42,** comporte un ensemble d'électrovannes destinées à relier le volume de pilotage **42** alternativement à la conduite d'alimentation **24** reliée au volume d'admission **36,** et à un orifice de vidange **58.** Cet ensemble est ici constitué d'une électrovanne de vidange **60** et d'une électrovanne de remplissage **62** branchées en série entre le volume de pilotage **42** et la conduite d'alimentation **24** reliée au volume d'admission **36,** l'électrovanne de vidange **60** étant branchée entre l'électrovanne de remplissage **62** et le volume de pilotage **42.** L'électrovanne de vidange **60** est une électrovanne en tout ou rien normalement ouverte, au sens où, en l'absence d'alimentation électrique, elle se trouve dans une position reliant le volume de pilotage **42** à l'orifice de vidange **58.** Elle est pourvue d'un étranglement **64** qui permet de lisser et finement contrôler la diminution de la pression de pilotage lors des opérations de vidange du volume de pilotage **42.** L'électrovanne de remplissage **62** est une électrovanne en tout ou rien, normalement fermée au sens où, en l'absence d'alimentation électrique, elle se place dans une position isolant le volume de pilotage **42** du volume d'admission **36** et de la conduite de remplissage **24.** Un réducteur de pression **66** est interposé entre la vanne de remplissage **60** et la conduite de remplissage **24,** pour définir une pression de pilotage nominale correspondant à la pression nominale souhaitée dans la conduite générale de frein **20.** En outre, un étranglement **68** est prévu pour lisser et finement contrôler l'augmentation de la pression de pilotage lors des opérations de remplissage du volume de pilotage **42.**

L'électrovanne de vidange **60** et l'électrovanne de remplissage **62** sont connectées électriquement à un circuit électrique de pilotage **70** qui les active simultanément ou séquentiellement de façon à augmenter ou diminuer la pression dans le volume de pilotage **42,** ou à isoler le volume de pilotage **42,** en vue de répondre à un ordre communiqué par une manette **72** ou un automatisme.

En présence d'un ordre de desserrage des freins, le circuit électrique de pilotage **70** alimente les électrovannes **60, 62** de manière à fermer l'électrovanne de vidange **60** pour relier le volume de pilotage **42** à l'électrovanne de remplissage **62** et à ouvrir l'électrovanne de remplissage **62** pour relier le volume de pilotage **42** à la conduite d'alimentation **24** par l'intermédiaire de l'électrovanne de vidange **60** et de l'étranglement **68.**

En présence d'un ordre de serrage, les électrovannes **60, 62** ne sont pas alimentées et trouvent leur position par défaut, de sorte que l'électrovanne de vidange **60** s'ouvre dans une position de vidange reliant le volume de pilotage **42** à l'orifice de vidange **58** par l'intermédiaire de l'étranglement **58,** et que l'électrovanne de remplissage **62** se ferme dans de manière à isoler l'électrovanne de vidange **60** de la conduite d'alimentation **24.**

Pour isoler le volume de pilotage **42,** le circuit électrique de pilotage **70** provoque la fermeture de l'électrovanne de vidange **60** et maintient fermée l'électrovanne de remplissage **62.**

De façon optionnelle, le circuit électrique de pilotage **70** peut comporter en outre une commande de déclenchement d'un palier initial de serrage, comportant un pressostat **74** détectant un seuil de pression dans le volume de pilotage **42** et un circuit logique **76** qui, en réponse à un ordre initial de serrage des freins, fait diminuer la pression de pilotage comme décrit précédemment depuis la pression de pilotage nominale jusqu'à ce que le pressostat **74** détecte un franchissement de seuil, par exemple de **0,4** bars en dessous de la pression de pilotage nominale, correspondant à un premier palier de serrage des freins. Une fois atteint ce seuil, le circuit logique **76** pilote les électrovannes **60, 62** pour maintenir la pression de pilotage au seuil.

Pour stabiliser l'étage de pilotage **30,** un réservoir tampon de pilotage **78** est relié au volume de pilotage **42.** Ce réservoir de pilotage **78** a de préférence une faible capacité, de l'ordre d'un litre, et peut le cas échéant être incorporé dans le corps **34** de la vanne pneumatique de relais **32.**

L'étage de pilotage électropneumatique **30** comporte en outre une soupape de vidange **80** à commande pneumatique apte à vidanger le volume de pilotage **42** en présence d'une différence de pression supérieure à un seuil positif donné, par exemple de 1,5 bars, entre le volume de pilotage **42** et le volume d'échappement **38.** Cette soupape de vidange **80** permet de commander l'étage de pilotage **30** dans des circonstances exceptionnelles, par exemple en cas de fuite importante dans la conduite générale de frein **20,** ou en cas de déclenchement d'un frein d'urgence et d'ouverture de la vanne de freinage d'urgence **27** ayant pour effet de vidanger la conduite générale de frein **20.**

Naturellement, les exemples représentés sur les figures et discutés ci-dessus ne sont donnés qu'à titre illustratif et non limitatif. Les deux électrovannes peuvent être remplacées par une électrovanne unique en tout ou rien ou tout autre ensemble d'électrovannes d'effet équivalent.

La vanne pneumatique de relais a été illustrée de façon schématique pour les besoins de la description. Une telle vanne est connue en soi et disponible sur le marché (par exemple référence commerciale Knorr Bremse « Valve de relais KR-5 ») pour d'autres applications.

Bien que l'on ait décrit une source de pression commune pour l'étage de puissance **28** et l'étage de pilotage **30,** à savoir la conduite d'alimentation **24,** on peut très bien envisager une source de pression distincte pour chaque étage.

L'utilisation du robinet de mécanicien et du circuit de freinage l'incorporant n'est pas limitée à la configuration de rame illustrée sur la figure **1****,** mais est au contraire envisagée pour d'autres types de rames, à un ou plusieurs véhicules, tractés par une locomotive ou automoteurs, articulées ou non.

Il est explicitement prévu que l'on puisse combiner entre eux les différents modes de réalisation illustrés pour en proposer d'autres.

Il est souligné que toutes les caractéristiques, telles qu'elles se dégagent pour un homme du métier à partir de la présente description, des dessins et des revendications attachées, même si concrètement elles n'ont été décrites qu'en relation avec d'autres caractéristiques déterminées, tant individuellement que dans des combinaisons quelconques, peuvent être combinées à d'autres caractéristiques ou groupes de caractéristiques divulguées ici, pour autant que cela n'a pas été expressément exclu ou que des circonstances techniques rendent de telles combinaisons impossibles ou dénuées de sens.

## Revendications

1. Robinet de mécanicien (22) pour commander un circuit pneumatique de freinage d'une rame (10) d'un ou plusieurs véhicules ferroviaires (12), le circuit pneumatique de freinage comportant une conduite d'alimentation (24), une conduite générale de frein (20) pour distribuer une pression à un ou plusieurs mécanismes de freins pneumatiques (18), le robinet de mécanicien (22) comportant :
- une vanne pneumatique de relais (32) comportant un volume d'admission (36) destiné à être raccordé à la conduite d'alimentation (24), un volume d'échappement (38) destiné à être raccordé à la conduite générale de frein (20), un orifice de purge (40) et un volume de pilotage (42), la vanne pneumatique de relais (32) étant apte, en présence d'une différence positive suffisante entre une pression de pilotage régnant dans le volume de pilotage (42) et une pression d'échappement régnant dans le volume d'échappement (38), à ouvrir un passage entre le volume d'admission (36) et le volume d'échappement (38), et étant apte à ouvrir un passage entre le volume d'échappement (38) et l'orifice de purge (40) au moins lorsque le volume de pilotage (42) est à la pression atmosphérique ; et
- un étage de pilotage électropneumatique (30) pour faire varier la pression de pilotage, comportant un ensemble d'une ou plusieurs électrovannes (60, 62), apte à relier le volume de pilotage (42) alternativement à une source de pression (24) et à un orifice de vidange (58),
**caractérisé en ce que** l'étage de pilotage électropneumatique (30) comporte en outre une soupape de vidange (80) apte à vidanger le volume de pilotage (42) en présence d'une différence de pression supérieure à un seuil positif donné entre le volume de pilotage (42) et le volume d'échappement (38).

2. Robinet de mécanicien (22) selon la revendication 1, **caractérisé en ce que** la vanne pneumatique de relais (32) est apte à maintenir le volume d'échappement (38) isolé du volume d'admission (36) et de l'orifice de purge (40) lorsque la différence entre la pression de pilotage et la pression d'échappement est supérieure à un seuil positif donné de purge et inférieure à un seuil positif donné de remplissage.

3. Robinet de mécanicien (22) selon l'une quelconque des revendications précédentes, **caractérisé en ce que** l'ensemble d'une ou plusieurs électrovannes (60,62) a un état normalement ouvert reliant le volume de pilotage (42) à l'orifice de vidange (58) en l'absence d'alimentation électrique.

4. Robinet de mécanicien (22) selon l'une quelconque des revendications précédentes, **caractérisé en ce que** l'ensemble d'une ou plusieurs électrovannes comporte une électrovanne de vidange (60) apte à relier le volume de pilotage à l'orifice de vidange (58), de préférence par l'intermédiaire d'un étranglement (64).

5. Robinet de mécanicien (22) selon la revendication 4, **caractérisé en ce que** l'électrovanne de vidange (60) est une électrovanne en tout ou rien.

6. Robinet de mécanicien (22) selon la revendication 5, **caractérisé en ce que** l'électrovanne de vidange (60) est normalement ouverte dans une position reliant le volume de pilotage (42) à l'orifice de vidange (58) en l'absence d'alimentation électrique.

7. Robinet de mécanicien (22) selon l'une quelconque des revendications précédentes, **caractérisé en ce que** l'ensemble d'une ou plusieurs électrovannes (60, 62) comporte une électrovanne de remplissage (62) apte à relier la source de pression (24) au volume de pilotage (42), de préférence par l'intermédiaire d'un étranglement (68).

8. Robinet de mécanicien (22) selon la revendication 7, **caractérisé en ce que** l'électrovanne de remplissage (62) est une électrovanne en tout ou rien.

9. Robinet de mécanicien (22) selon la revendication 8, **caractérisé en ce que** l'électrovanne de remplissage (62) est normalement fermée dans une position isolant le volume de pilotage (42) de la source de pression (24) en l'absence d'alimentation électrique.

10. Robinet de mécanicien (22) selon l'une quelconque des revendications 4 à 6 en combinaison avec l'une quelconque des revendications 7 à 9, **caractérisé en ce que** l'électrovanne de vidange (60) est branchée en série entre l'électrovanne de remplissage (62) et le volume de pilotage (42), pour relier le volume de pilotage (42) alternativement à l'électrovanne de remplissage (62) ou à l'orifice de vidange (58).

11. Robinet de mécanicien (22) selon la revendication 10, **caractérisé en ce que** l'étage de pilotage électropneumatique (30) comporte en outre un circuit électrique de pilotage (70) apte d'une part, en réponse à un signal électrique de desserrage des freins, à positionner l'électrovanne de vidange (60) dans une position reliant le volume de pilotage (42) à l'électrovanne de remplissage (62) et à positionner l'électrovanne de remplissage (60) dans une position de remplissage reliant le volume de pilotage (42) à la source de pression (24) par l'intermédiaire de l'électrovanne de vidange (60) et d'autre part, en présence d'un signal électrique de serrage des freins, à positionner l'électrovanne de vidange (60) dans une position de vidange reliant le volume de pilotage (42) à l'orifice de vidange (58) et à positionner l'électrovanne de remplissage (62) dans une position isolant l'électrovanne de vidange (60) de la source de pression (24).

12. Robinet de mécanicien (22) selon l'une quelconque des revendications précédentes, **caractérisé en ce que** l'étage de pilotage électropneumatique (30) comporte en outre une commande de déclenchement d'un palier initial de serrage, comportant un pressostat (72) relié au volume de pilotage (42), et un circuit logique (76) relié au pressostat (72) et à l'ensemble d'une ou plusieurs électrovannes (60, 62), et apte, en réponse à un ordre de desserrage, à générer à destination de l'ensemble d'une ou plusieurs électrovannes (60, 62) une commande électrique de vidange partielle du volume de pilotage (42) jusqu'à détection par le pressostat (72) du franchissement d'un seuil prédéterminé de pression, puis à réguler le volume de pilotage (42) au seuil prédéterminé de pression.

13. Robinet de mécanicien (22) l'une quelconque des revendications précédentes, **caractérisé en ce que** la vanne pneumatique de relais (32) est apte, en présence d'une différence positive suffisante entre une pression de pilotage régnant dans le volume de pilotage (42) et une pression d'échappement régnant dans le volume d'échappement (38), à ouvrir le passage entre le volume d'admission (36) et le volume d'échappement (38) avec une section de passage fonction de la pression de pilotage et de la pression d'échappement.

14. Robinet de mécanicien (22) selon l'une quelconque des revendications précédentes, **caractérisé en ce qu'**il comporte en outre un réservoir de pilotage (78) relié au volume de pilotage (42), et ayant une capacité de préférence inférieure à 10 litres, de préférence inférieure à 4 litres, et de préférence supérieure à 1 litre.

15. Circuit pneumatique de freinage d'une rame (10) d'un ou plusieurs véhicules ferroviaires (12), comportant une conduite d'alimentation (24) reliée à un générateur de pression (26), une conduite générale de frein (20) pour distribuer une pression à un ou plusieurs mécanismes de freins pneumatiques (18), **caractérisé en ce qu'**il comporte en outre un robinet de mécanicien (22) selon l'une quelconque des revendications précédentes.

16. Circuit pneumatique de freinage d'une rame (10) d'un ou plusieurs véhicules ferroviaires (12) selon la revendication 15, **caractérisé en ce qu'**il comporte en outre une vanne de freinage d'urgence (27) indépendante du robinet de mécanicien et branchée sur la conduite générale de frein (20) pour vidanger la conduite générale de frein (20).

## Patentansprüche

1. Führerbremsventil (22) zum Steuern eines Druckluftbremskreises eines Wagenzugs (10) aus einem oder mehreren Schienenfahrzeugen (12), wobei der Druckluftbremskreis eine Versorgungsleitung (24), eine Hauptdruckluftleitung (20) zum Verteilen eines Drucks an einen oder mehrere Druckluftbremsmechanismen (18) umfasst, wobei das Führerbremsventil (22) umfasst:
- ein Druckluft-Relaisventil (32), umfassend ein Einströmvolumen (36) zum Anschluss an die Versorgungsleitung (24), ein Ausströmvolumen (38) zum Anschluss an die Hauptdruckluftleitung (20), eine Entlüftungsöffnung (40) und ein Steuervolumen (42), wobei das Druckluft-Relaisventil (32) bei einer ausreichenden positiven Differenz zwischen einem im Steuervolumen (42) herrschenden Steuerdruck und einem im Ausströmvolumen (38) herrschenden Ausströmdruck einen Durchlass zwischen dem Einströmvolumen (36) und dem Ausströmvolumen (38) öffnen und einen Durchlass zwischen dem Ausströmvolumen (38) und der Entlüftungsöffnung (40) zumindest dann öffnen kann, wenn das Steuervolumen (42) unter atmosphärischem Druck steht; und
- eine elektropneumatische Steuerstufe (30) zum Variieren des Steuerdrucks, umfassend eine Anordnung aus einem oder mehreren Magnetventilen (60, 62), die das Steuervolumen (42) abwechselnd mit einer Druckquelle (24) und einer Entleerungsöffnung (58) verbinden kann,
**dadurch gekennzeichnet, dass** die elektropneumatische Steuerstufe (30) ferner ein Entleerungsventil (80) umfasst, das geeignet ist, das Steuervolumen (42) bei einem Druckunterschied oberhalb eines gegebenen positiven Grenzwerts zwischen dem Steuervolumen (42) und dem Ausströmvolumen (38) zu entleeren.

2. Führerbremsventil (22) nach Anspruch 1, **dadurch gekennzeichnet, dass** das Druckluft-Relaisventil (32) das Ausströmvolumen (38) vom Anströmvolumen (36) und der Entlüftungsöffnung (40) isoliert halten kann, wenn der Unterschied zwischen dem Steuerdruck und dem Ausströmdruck oberhalb eines gegebenen positiven Entlüftungsgrenzwerts und unterhalb eines gegebenen positiven Füllgrenzwerts liegt.

3. Führerbremsventil (22) nach einem der vorhergehenden Ansprüche, **dadurch gekennzeichnet, dass** die Anordnung aus einem oder mehreren Magnetventilen (60, 62) einen normalerweise offenen Zustand aufweist, der das Steuervolumen (42) in Abwesenheit einer Stromversorgung mit der Entleerungsöffnung (58) verbindet.

4. Führerbremsventil (22) nach einem der vorhergehenden Ansprüche, **dadurch gekennzeichnet, dass** die Anordnung aus einem oder mehreren Magnetventilen ein Entleerungsmagnetventil (60) umfasst, das das Steuervolumen mit der Entleerungsöffnung (58) verbinden kann, vorzugsweise über eine Engstelle (64).

5. Führerbremsventil (22) nach Anspruch 4, **dadurch gekennzeichnet, dass** das Entleerungsmagnetventil (60) ein Auf/Zu-Magnetventil ist.

6. Führerbremsventil (22) nach Anspruch 5, **dadurch gekennzeichnet, dass** das Entleerungsmagnetventil (60) normalerweise in einer Stellung geöffnet ist, die das Steuervolumen (42) in Abwesenheit einer Stromversorgung mit der Entleerungsöffnung (58) verbindet.

7. Führerbremsventil (22) nach einem der vorhergehenden Ansprüche, **dadurch gekennzeichnet, dass** die Anordnung aus einem oder mehreren Magnetventilen (60, 62) ein Füllmagnetventil (62) umfasst, das die Druckquelle (24) mit dem Steuervolumen (42) verbinden kann, vorzugsweise über eine Engstelle (68).

8. Führerbremsventil (22) nach Anspruch 7, **dadurch gekennzeichnet, dass** das Füllmagnetventil (62) ein Auf/Zu-Magnetventil ist.

9. Führerbremsventil (22) nach Anspruch 8, **dadurch gekennzeichnet, dass** das Füllmagnetventil (62) normalerweise in einer Stellung geschlossen ist, die das Steuervolumen (42) in Abwesenheit einer Stromversorgung von der Druckquelle (24) isoliert.

10. Führerbremsventil (22) nach einem der Ansprüche 4 bis 6 in Kombination mit einem der Ansprüche 7 bis 9, **dadurch gekennzeichnet, dass** das Entleerungsmagnetventil (60) zwischen dem Füllmagnetventil (62) und dem Steuervolumen (42) in Reihe geschaltet ist, um das Steuervolumen (42) abwechselnd mit dem Füllmagnetventil (62) oder der Entleerungsöffnung (58) zu verbinden.

11. Führerbremsventil (22) nach Anspruch 10, **dadurch gekennzeichnet, dass** die Druckluft-Steuerstufe (30) ferner eine elektrische Steuerschaltung (70) umfasst, die einerseits auf ein elektrisches Bremslössignal ansprechen kann, das Entleerungsmagnetventil (60) in eine Stellung zu bringen, die das Steuervolumen (42) mit dem Füllmagnetventil (62) verbindet, und das Füllmagnetventil (60) in eine Füllstellung bringen kann, die das Steuervolumen (42) über das Entleerungsmagnetventil (60) mit der Druckquelle (24) verbindet, und andererseits bei einem elektrischen Bremsbetätigungssignal das Entleerungsmagnetventil (60) in eine Entleerungsstellung bringen kann, die das Steuervolumen (42) mit der Entleerungsöffnung (58) verbindet, und das Füllmagnetventil (62) in eine Stellung bringen kann, die das Entleerungsmagnetventil (60) von der Druckquelle (24) isoliert.

12. Führerbremsventil (22) nach einem der vorhergehenden Ansprüche, **dadurch gekennzeichnet, dass** die elektropneumatische Steuerstufe (30) ferner einen Befehl zum Auslösen eines ersten Spannlagers umfasst, umfassend einen Druckschalter (72), der mit dem Steuervolumen (42) verbunden ist, und eine Logikschaltung (76), die mit dem Druckschalter (72) und der Anordnung aus einem oder mehreren Magnetventilen (60, 62) verbunden ist, und als Reaktion auf einen Lösebefehl an die Anordnung aus einem oder mehreren Magnetventilen (60, 62) einen elektrischen Befehl zum Teilentleeren des Steuervolumens (42) erzeugen kann, bis der Druckschalter (72) erkennt, dass ein vorbestimmter Druckgrenzwerts überschritten wurde, und dann das Steuervolumen (42) auf den vorbestimmten Druckgrenzwert regeln kann.

13. Führerbremsventil (22) nach einem der vorhergehenden Ansprüche, **dadurch gekennzeichnet, dass** das Druckluft-Relaisventil (32) bei einer ausreichenden positiven Differenz zwischen einem im Steuervolumen (42) herrschenden Steuerdruck und einem im Ausströmvolumen (38) herrschenden Ausströmdruck, den Durchlass zwischen dem Einströmvolumen (36) und dem Ausströmvolumen (38) mit einem vom Steuerdruck und Ausströmdruck abhängigen Durchlassquerschnitt öffnen kann.

14. Führerbremsventil (22) nach einem der vorhergehenden Ansprüche, **dadurch gekennzeichnet, dass** es ferner einen Steuertank (78) umfasst, der mit dem Steuervolumen (42) verbunden ist, und ein Fassungsvermögen von vorzugsweise unter zehn Litern, vorzugsweise von unter vier Litern, und vorzugsweise von unter einem Liter aufweist.

15. Druckluftbremskreis eines Wagenzugs (10) aus einem oder mehreren Schienenfahrzeugen (12), umfassend eine Versorgungsleitung (24), die mit einem Druckgenerator (26) verbunden ist, eine Hauptdruckluftleitung (20) zum Verteilen eines Drucks an einen oder mehrere Druckluftbremsmechanismen (18), **dadurch gekennzeichnet, dass** er ferner ein Führerbremsventil (22) nach einem der vorhergehenden Ansprüche umfasst.

16. Druckluftbremskreis eines Wagenzugs (10) aus einem oder mehreren Schienenfahrzeugen (12) nach Anspruch 15, **dadurch gekennzeichnet, dass** er ferner ein Notbremsventil (27) umfasst, das unabhängig vom Führerbremsventil und an die Hauptdruckluftleitung (20) angeschlossen ist, um die allgemeine Bremsleitung (20) zu entleeren.

## Claims

1. Automatic brake valve (22) for controlling a pneumatic braking circuit of a consist (10) of one or more railway vehicles (12), the pneumatic braking circuit comprising a supply pipe (24), and a general brake pipe (20) for distributing pressure to one or more pneumatic braking mechanisms (18), the automatic brake valve (22) comprising:
- a pneumatic relay valve (32) comprising an intake volume (36) intended to be coupled to the supply pipe (24), an exhaust volume (38) intended to be coupled to the general brake pipe (20), a purge opening (40) and a control volume (42), the pneumatic relay valve (32) being capable, in the presence of a sufficient positive difference between a control pressure prevailing in the control volume (42) and an exhaust pressure prevailing in the exhaust volume (38), of opening a passage between the intake volume (36) and the exhaust volume (38), and being capable of opening a passage between the exhaust volume (38) and the purge opening (40) at least when the control volume (42) is at atmospheric pressure; and
- an electropneumatic control stage (30) for varying the control pressure, comprising a set of one or more solenoid valves (60, 62), which is capable of alternately connecting the control volume (42) to a pressure source (24) and to a drain opening (58),
**characterised in that** the electropneumatic control stage (30) further comprises a drain valve (80) capable of draining the control volume (42) in the presence of a pressure difference greater than a specified positive threshold between the control volume (42) and the exhaust volume (38).

2. Automatic brake valve (22) according to claim 1, **characterised in that** the pneumatic relay valve (32) is capable of keeping the exhaust volume (38) isolated from the intake volume (36) and from the purge opening (40) when the difference between the control pressure and the exhaust pressure is greater than a specified positive purge threshold and less than a specified positive filling threshold.

3. Automatic brake valve (22) according to either of the preceding claims, **characterised in that** the set of one or more solenoid valves (60, 62) has a normally open state which connects the control volume (42) to the drain opening (58) in the absence of electrical power.

4. Automatic brake valve (22) according to any of the preceding claims, **characterised in that** the set of one or more solenoid valves comprises a drain solenoid valve (60) capable of connecting the control volume to the drain opening (58), preferably through a constriction (64).

5. Automatic brake valve (22) according to claim 4, **characterised in that** the drain solenoid valve (60) is an all-or-nothing solenoid valve.

6. Automatic brake valve (22) according to claim 5, **characterised in that** the drain solenoid valve (60) is normally open in a position that connects the control volume (42) to the drain opening (58) in the absence of electrical power.

7. Automatic brake valve (22) according to any of the preceding claims, **characterised in that** the set of one or more solenoid valves (60, 62) comprises a filling solenoid valve (62) capable of connecting the pressure source (24) to the control volume (42), preferably through a constriction (68).

8. Automatic brake valve (22) according to claim 7, **characterised in that** the filling solenoid valve (62) is an all-or-nothing solenoid valve.

9. Automatic brake valve (22) according to claim 8, **characterised in that** the filling solenoid valve (62) is normally closed in a position that isolates the control volume (42) from the pressure source (24) in the absence of electrical power.

10. Automatic brake valve (22) according to any of claims 4 to 6 in combination with any of claims 7 to 9, **characterised in that** the drain solenoid valve (60) is connected in series between the filling solenoid valve (62) and the control volume (42), in order to alternately connect the control volume (42) to the filling solenoid valve (62) or to the drain opening (58).

11. Automatic brake valve (22) according to claim 10, **characterised in that** the electropneumatic control stage (30) further comprises an electric control circuit (70) which is capable, in response to an electric signal for releasing the brakes, of positioning the drain solenoid valve (60) in a position that connects the control volume (42) to the filling solenoid valve (62) and of positioning the filling solenoid valve (60) in a filling position that connects the control volume (42) to the pressure source (24) by means of the drain solenoid valve (60), and which is also capable, in the presence of an electric signal for applying the brakes, of positioning the drain solenoid valve (60) in a draining position that connects the control volume (42) to the drain opening (58) and of positioning the filling solenoid valve (62) in a position that isolates the drain solenoid valve (60) from the pressure source (24).

12. Automatic brake valve (22) according to any of the preceding claims, **characterised in that** the electropneumatic control stage (30) further comprises a controller for activating an initial clamping bearing, comprising a pressure switch (72) connected to the control volume (42), and a logic circuit (76) connected to the pressure switch (72) and to the set of one or more solenoid valves (60, 62), and capable, in response to a release order, of generating, for the set of one or more solenoid valves (60, 62), an electric command for partially draining the control volume (42) until the pressure switch (72) detects that a predetermined pressure threshold has been crossed, and then regulating the control volume (42) to the predetermined pressure threshold.

13. Automatic brake valve (22) according to any of the preceding claims, **characterised in that** the pneumatic relay valve (32) is capable, in the presence of a sufficient positive difference between a control pressure prevailing in the control volume (42) and an exhaust pressure prevailing in the exhaust volume (38), of opening the passage between the intake volume (36) and the exhaust volume (38) so as to have a cross section of flow that depends on the control pressure and the exhaust pressure.

14. Automatic brake valve (22) according to any of the preceding claims, **characterised in that** it further comprises a control tank (78) which is connected to the control volume (42) and has a capacity of preferably less than 10 liters, preferably less than 4 liters, and preferably greater than 1 liter.

15. Pneumatic braking circuit of a train (10) of one or more railway vehicles (12), comprising a supply pipe (24) connected to a pressure generator (26), and a general brake pipe (20) for distributing pressure to one or more pneumatic braking mechanisms (18), **characterised in that** it further comprises an automatic brake valve (22) according to any of the preceding claims.

16. Pneumatic braking circuit of a train (10) of one or more railway vehicles (12) according to claim 15, **characterised in that** it further comprises an emergency braking valve (27) that is independent of the automatic brake valve and is connected to the general brake pipe (20) in order to drain the general brake pipe (20).
